(19) Europäisches Patentamt
European Patent Office
Office européen des brevets

(11) **EP 3 179 216 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*G01D 5/245* *(2006.01)*     *G01D 5/249* *(2006.01)*

(21) Anmeldenummer: **16202697.5**

(22) Anmeldetag: **07.12.2016**

(54) **ABSOLUT MESSENDES LÄNGENMESSSYSTEM UND VERFAHREN ZU SEINEM BETRIEB**

ABSOLUTE MEASUREMENT LENGTH MEASURING SYSTEM AND METHOD OF OPERATING THE SAME

SYSTÈME DE MESURE DE LONGUEUR ABSOLU ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 DE 102015121474**

(43) Veröffentlichungstag der Anmeldung:
**14.06.2017 Patentblatt 2017/24**

(73) Patentinhaber: **Balluff GmbH**
**73765 Neuhausen a.d.F. (DE)**

(72) Erfinder: **Burkhardt, Thomas**
**73119 Zell (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**EP-A1- 1 770 373**     **EP-A1- 1 980 824**
**DE-A1- 10 230 471**     **DE-A1-102006 048 628**

## Beschreibung

Absolut messendes Längenmesssystem und Verfahren zu seinem Betrieb

Die Erfindung geht aus von einem absoluten Längenmesssystem bzw. Positionsmesssystem mit einem vorzugsweise magnetisch kodierten, eine Inkrementalspur sowie wenigstens eine Absolutspur aufweisenden Maßkörper sowie von einem Verfahren zum Betrieb eines solchen Längen- bzw. Positionsmesssystems, nach der Gattung der jeweiligen unabhängigen Ansprüche.

## Stand der Technik

Inkrementelle Messsysteme

Auf dem Gebiet der Messtechnik sind Magnetband-Längenmesssysteme bekannt geworden, bei denen ein Sensorkopf über einen mit wechselnder Polarität periodisch magnetisierten Maßkörper ("Inkrementalspur") bewegt wird. Durch die Bewegung wird in dem Sensorkopf bzw. Magnetfeldsensor im Idealfall ein sinusförmiges und cosinusförmiges Sensorsignal erzeugt ("Inkrementalsensor"). Je nach magnetischem Messprinzip wiederholt sich der Signalverlauf im Sensorkopf mit jedem Pol des Maßkörpers (z.B. bei GMR- oder AMR-Sensoren, welche das Quadrat der magnetischen Flussdichte $B^2$ messen) oder mit jedem Polpaar des Maßkörpers (z.B. bei Hall-Sensoren, welche eine Ausgangsspannung liefern, die proportional zum Produkt aus magnetischer Feldstärke und Strom ist). Die Positionsbestimmung an einer genannten Inkrementalspur erfolgt in an sich bekannter Weise, z.B. mittels trigonometrischer Funktionen.

Absolute Messsysteme mit mehreren Spuren

An einem Maßkörper gibt es mehrere Spuren. Zusätzlich zu der Inkrementalspur des Inkrementalsensors enthält ein Sensorkopf bei einem absoluten Messsystem wenigstens einen Absolutsensor, um eine oder mehrere Absolutspuren abzutasten. Sowohl der Inkrementalsensor als auch der Absolutsensor sind dabei meist in einem einzigen Sensorkopfgehäuse angeordnet. Die Inkremental-Position gibt die Position des Sensors bzw. Sensorkopfes innerhalb eines Poles bzw. Polpaares (je nach physikalischem Messprinzip) an bzw. zurück. Die absolute Position kann mit folgendem Algorithmus berechnet werden:

$$\text{Position (absolut)} = \text{Position (im Pol)} + \text{Polnummer} * \text{Polbreite.}$$

Zur Bestimmung der Polnummer wird meist eine digital Pseudo-Random-Coded-(kodierte) (=PRC-) Spur mit logischen Werten 0 und 1 entsprechend den N- und S-Polen eingesetzt.
Aus der WO 01/09568 A1 geht hervor, zusätzlich zu genannten einzelnen Polen eines Maßkörpers auch Polpaare in Form eines sogenannten "invertierenden Kodewortes" zu verwenden bzw. auszuwerten. Die genannte Kodierung logischer Werte erfolgt dabei nicht durch einen einzigen Pol, bei einem magnetischen Messsystem der N-Pol oder der S-Pol, sondern durch wenigstens zwei in der genannten Absolutspur in Messrichtung jeweils zusammengefasste Pole. Dabei weist ein solches Polpaar die doppelte Polbreite der Inkrementalspur auf, wodurch ein logischer Wert durch die Polabfolge N-S bzw. die abgeänderte Polabfolge S-N gebildet wird. Der Vorteil dieser Anordnung von Polpaaren ist, dass bei einem Übergang einer logischen ,0' auf eine logische '1' oder von einer logischen '1' auf eine logische '0' immer zwei benachbarte gleichsinnige Pole auftreten. Diese gleichsinnigen Pole mit der doppelten Polbreite lassen sich aufgrund der Verdopplung der Feldstärke besser sensieren, als Pole mit nur einfacher Polbreite. Daher kann insbesondere der Luftspalt bei einem solchen Längenmesssystem vergrößert werden.

## Offenbarung der Erfindung

Der Erfindung liegt die Aufgabe zugrunde, ein hier betroffenes Längen- bzw. Positionsmesssystem sowie ein Verfahren zu seinem Betrieb anzugeben, mit denen die zur Auswertung der PRC-Spur erforderliche Anzahl an genannten Sensoren reduziert wird. Damit verkürzt sich auch die Länge eines aus den Sensoren gebildeten PRC-Sensorarrays zur Auswertung der PRC-Spur und damit auch die Gehäuselänge sowie die Herstellungskosten.
Die im Stand der Technik bekannten Ansätze setzen voraus, dass die Pole einer hier betroffenen inkrementalen Spur und einer Absolutspur gegeneinander phasenerhaltend bzw. phasentreu angeordnet bzw. ausgerichtet sind. Mit jedem solchen digitalen Sensor ergibt sich immer nur ein Bit.
Der vorliegenden Erfindung liegt nun aber das Konzept zugrunde, die Phasen der Inkrementalspur und der Absolutspur in Messrichtung bzw. in Längsrichtung eines genannten Maßkörpers gegeneinander so zu verschieben, dass eine Phasenkodierung der Absolutspur relativ zur Inkrementalspur ermöglicht wird. Dadurch lässt sich quasi im Wege einer "Analogisierung" die Anzahl der pro Sensor erfassten Messwerte erhöhen, und zwar von den genannten zwei logischen Werten (0 und 1) auf z.B. fünf quasi analog quantisierte Werte. Daher lassen sich mit n Sensoren nicht nur $2^n$ Pole detektieren, sondern in dem Beispiel $5^n$ Pole. Dadurch wird die messbare Länge größer bzw. die Anzahl der Sensoren reduziert und damit die Länge des PRC-Sensorarrays kürzer.

Verallgemeinernd lassen sich mit jeweiligen Winkeldifferenzen entsprechenden m logischen Werten und mit n Sensoren $m^n$ Werte erfassen, so dass sich n Digits zu einem Gesamtwert verknüpfen lassen, wodurch insgesamt $m^n$ Werte abbildbar sind.

Das vorgeschlagene Konzept bietet, im Vergleich mit rein digitalen Kodes auf der Grundlage von Einzelpolen, die folgenden Vorteile. Gegenüber binärer Kodierung sind für die gleiche Messlänge weniger Sensoren erforderlich, woraus sich wiederum ein Kostenvorteil sowie die Möglichkeit der Implementierung eines Längenmesssystems in einem kürzeren Gehäuse ergeben. Zudem ergibt sich ein gegenüber dem Stand der Technik robusteres Messsystem, da der Signalverlauf präziser messbar ist und nicht nur digital erkannt wird. Denn dadurch lassen sich mehrere der genannten Stufen je Digit bzw. eine höhere Anzahl an logischen Zwischenwerten realisieren.

Zudem ist anzumerken, dass bei einer erhöhten Anzahl von Stufen je Digit vorteilhafter Weise weniger Sensoren für die Absolutspur benötigt werden. Durch die Möglichkeit der Kodierung über Polpaare ist zudem die Signalgüte weitestgehend unabhängig vom Abstand zwischen dem Maßkörper und dem Sensor.

Bei einem hier betroffenen Längen- bzw. Positionsmesssystem, welches einen zumindest lokal im Wesentlichen linearen Maßkörper sowie wenigstens einen relativ zu dem Maßkörper zu verfahrenden Sensor aufweist, wobei der Maßkörper eine Inkrementalspur und wenigstens eine Absolutspur umfasst und wobei die Inkrementalspur sowie die wenigstens eine Absolutspur in Längsrichtung des Maßkörpers angeordnete Pole bzw. Polpaare aufweisen, wird daher erfindungsgemäß insbesondere vorgeschlagen, dass Polpaare der Absolutspur gegenüber korrespondierenden bzw. quer zur Längsrichtung des Maßkörpers gegenüberliegenden Polpaaren der Inkrementalspur phasenverschoben sind, um eine genannte analoge bzw. logische Abstufung zu ermöglichen.

Es ist ferner anzumerken, dass ein genannter, im Wesentlichen linearer Maßkörper auch durch einen ringförmigen oder teilringförmigen Maßkörper gebildet sein kann, wobei der Maßkörper dann zumindest lokal linear ausgebildet ist.

Gemäß einer bevorzugten Ausgestaltung können durch die erfindungsgemäße Phasenverschiebung n verschiedene absolute Phasenbezüge eines Polpaares in Bezug auf eine Inkrementalspur abgebildet werden, wobei z.B. n = 4 ist. Bei diesen n Phasenbezügen ergeben sich gegenüber Polpaaren der Inkrementalspur Relativverschiebungen mit Winkeldifferenzen zwischen 0° und 360°, mittels derer entsprechende logische Werte 1, 2, usw. gebildet werden können. Im Falle von n=4 betragen die Winkeldifferenzen 0°, 90°, 180° und 270° und die logischen Werte entsprechend '0', '1', '2' und '3'.

Ferner kann vorgesehen sein, dass Übergangswerte bzw. -verläufe der Winkeldifferenzen zwischen zwei benachbarten, unterschiedlichen logischen Werten von der Auswertung der logischen Werte ausgenommen sind bzw. werden, d.h. bei der Auswertung ausgeschlossen oder ausgeklammert werden.

Um die genannten Verläufe der Winkeldifferenzen von der Auswertung der logischen Werte auszunehmen, können wenigstens zwei Absolutsensoren für jedes Polpaar bzw. logische Digit angeordnet sein, welche mechanisch versetzt, z.B. um 180° versetzt, angeordnet sind. Jeder Absolutsensor muss den Phasenbezug zur Inkrementalspur erkennen können. So kann jeder dieser Sensoren entweder aus zwei an verschiedenen Orten angeordneten Einzelsensoren, welche die Amplitude bewerten, oder aus einem an einem Ort angeordneten Sensorchip, der mit zwei unterschiedlich ausgerichteten Sensoren die Phase eines bevorzugt zweidimensionalen Magnetfeldes bestimmt, gebildet sein.

Ein Inkrementsensor erkennt dabei zunächst die Position innerhalb eines Polpaares, welches zu Zwecken der Auswertung in mehrere Bereiche, z.B. vier Quadranten, unterteilt wird. Wenn sich der Inkrementsensor in dem genannten Beispiel in einem ersten Quadranten oder in einem vierten Quadranten des jeweiligen Polpaares befindet, wird der zweite Absolutsensor für die Auswertung benutzt. Befindet sich der Inkrementsensor jedoch in einem zweiten Quadranten oder in einem dritten Quadranten, wird der erste Absolutsensor für die Auswertung benutzt. Mit diesem Ansatz lässt sich demnach der ungültige Bereich zwischen den Polpaaren kostengünstig und dennoch wirkungsvoll ausblenden.

Die Erfindung betrifft auch ein Verfahren zum Betrieb eines hier betroffenen Längen- bzw. Positionsmesssystems, bei dem insbesondere vorgesehen ist, dass die wenigstens zweifach abgestuften logischen Werte erfasst bzw. sensiert werden.

Ein erfindungsgemäßes Längen- bzw. Positionsmesssystems sowie das erfindungsgemäße Verfahren zu seinem Betrieb ermöglichen eine genauere und zuverlässigere Erkennung einer Absolutposition eines hier betroffenen Sensors, da nur noch Winkel, und nicht mehr wie im Stand der Technik binär digitalisierte Amplitudenwerte, miteinander verglichen werden. Dadurch ergibt sich ein erheblich verbessertes Signal/Rausch-Verhältnis.

Die Erfindung lässt sich nicht nur bei magnetischen Messsystemen, sondern auch bei optischen, kapazitiven, induktiven oder sonstigen Mess- bzw. Wirkprinzipien entsprechend anwenden, soweit der jeweilige Sensor bzw. Sensorkopf eine endliche Ausdehnung bzw. Größe in Polrichtung aufweist.

**Kurzbeschreibung der Figuren**

Fig. 1    zeigt einen Maßkörper eines Längenmesssystems, gemäß dem Stand der Technik.
Fig. 2    zeigt eine Inkrementalspur mit entsprechenden, von einem Inkrementalsensor erkannten Winkeln, gemäß dem Stand der Technik.
Fig. 3    zeigt eine erfindungsgemäß, relativ zu einer Inkrementalspur in beispielhaft vier Stufen durchgeführte Phasenkodierung, und zwar anhand von in Fig. 2 gezeigten Winkeln.
Fig. 4    zeigt einen Ausschnitt eines erfindungsgemäß ausgebildeten Maßkörpers eines Längenmesssystems, und zwar mit einer Phasenkodierung mit beispielhaft vier verschiedenen Phasenwerten.
Fig. 5    zeigt einen der Fig. 4 entsprechenden Ausschnitt eines erfindungsgemäß ausgebildeten Maßkörpers, zur Illustration des erfindungsgemäß sicheren Erkennens von logischen Werten zwischen Polpaaren.

**Detaillierte Beschreibung der Ausführungsbeispiele**

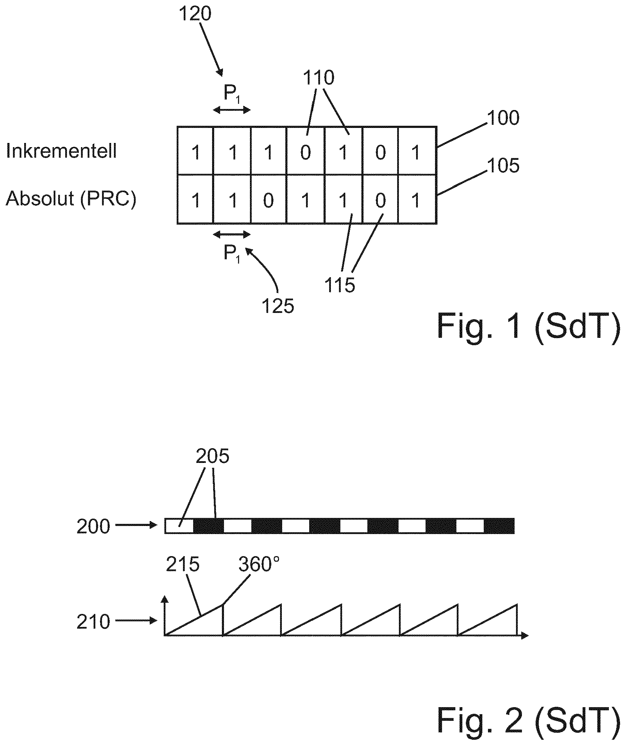

In der Fig. 1 ist schematisch ein an sich bekannter linearer Maßkörper eines Magnetband-Längenmesssystems (BML) mit einer Inkrementalspur 100 und einer mit der Inkrementalspur 100 fest bzw. ortsfest verbundenen Pseudo-Random Coded- (PRC-) Absolutspur 105 dargestellt. Die Inkrementalspur 100 weist abwechselnd binär kodierte Pole 110 und die Absolutspur 105 ebenfalls binär kodierte Pole 115 auf. Sowohl die Absolutspur 105 als auch die Inkrementalspur 100 weisen eine jeweils übereinstimmende Polbreite 'P1' 120, 125 auf.

Neben an sich bekannten Anwendungsszenarien mit einer im Wesentlichen linearen Messstrecke kann ein solcher Maßkörper 100, 105 auch auf dem Umfang einer Welle, z.B. einer hier nicht gezeigten Antriebswelle eines Windkraftwerks oder dergleichen, angeordnet sein. Das BML dient dabei zur Überwachung bzw. Wartung des Windkraftwerks, wenn die Position der Antriebswelle eindeutig erfasst werden muss.

Der mit dem Inkrementalsensor erkannte Winkel ändert sich in jedem Pol bzw. Polpaar 205, wie an sich bekannt, von 0° auf 360° (Bezugszeichen 215). Dies ist in Fig. 2 schematisch anhand einer dort gezeigten Inkrementalspur 200 dargestellt, wobei auch die genannten entsprechenden Winkelverläufe 210 über mehrere Polpaare dargestellt sind

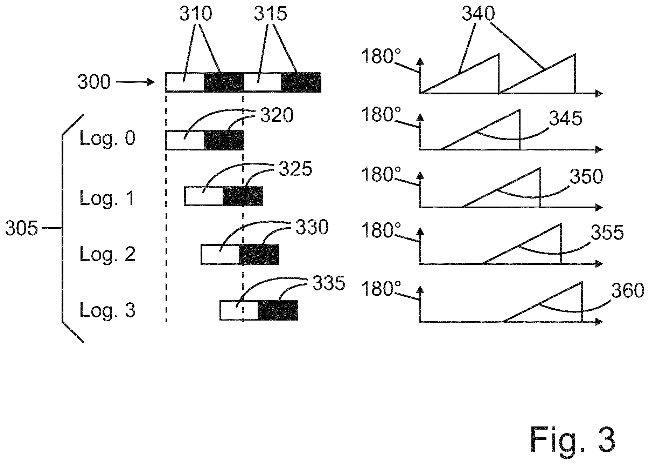

Wie bereits erwähnt, erfolgt die Kodierung einer Absolutspur nach dem erfindungsgemäßen Konzept durch eine Phasenverschiebung der Pole der Absolutspur gegenüber den Polen der Inkrementalspur. Dies ist beispielhaft anhand von vier Stufen in Fig. 3 gezeigt, wobei vier verschiedene absolute Phasenbezüge 305 eines Polpaares 320, 325, 330, 335 in Bezug auf eine Inkrementalspur 300 mit gezeigten Polpaaren 310, 315 abgebildet sind. Den vier Phasenbezügen mit gegenüber der Polpaare 310, 315 der Inkrementalspur 300 auftretenden Relativverschiebungen von 0°, 90°, 180° und 270° entsprechen die gezeigten logischen Werte '0', '1', '2' und '3'.

Es ist hierbei anzumerken, dass sich verallgemeinernd bei einer Implementierung mit n analogen Sensoren zur Abtastung von m-fach analog quantisierten Stufen $x = m^n$ Werte bzw. Pole eindeutig erkennen lassen. Die Anzahl der Sensoren ist demnach gegenüber einer im Stand der Technik bekannten Implementierung mit zwei (binären) logischen Werten, d.h. $m = 2$, vorteilhaft reduziert. So lassen sich z.B. bei $m = 5$ Werten und vier Sensoren $5^4 = 625$ Pole oder bei $m = 2$ (gemäß dem Stand der Technik) mit vier Sensoren $2^4 = 16$ Pole eindeutig erkennen. Um mit dem Stand der Technik auch 625 Pole eindeutig erkennen zu können, wären zehn (10) Sensoren erforderlich, da $2^{10} = 1024$ ergibt. Daher würden z.B. neun (9) Sensoren dazu nicht ausreichen. Aus diesen Gründen ergeben sich ein erheblicher Kostenvorteil und ein erheblicher Baugrößenvorteil der Erfindung, da nur vier anstatt zehn Sensoren benötigt werden.

Auf der rechten Seite der Fig. 3 sind die den Phasenbezügen 305 entsprechenden Winkelverläufe 345 - 360 dargestellt, und zwar der entsprechend dem in Fig. 2 bereits gezeigten Verlauf 215 auftretende Winkelverlauf 340 sowie die jeweiligen Winkelverläufe 345, 350, 355, 360 der phasenverschobenen 305 Absolutspuren.

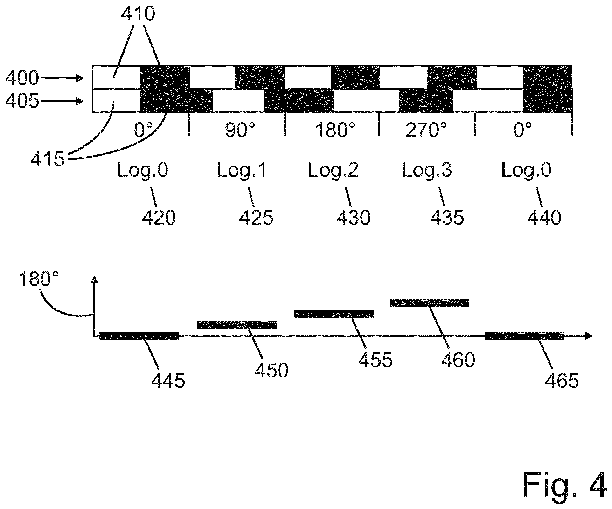

Bei dem in Fig. 4 dargestellten Ausschnitt eines erfindungsgemäß aufgebauten Maßkörpers 400, 405 mit einer Inkrementalspur 400 mit Polpaaren 410 sowie einer mit der Inkrementalspur 400 mechanisch ortsfest verbundenen Absolutspur 405 mit Polpaaren 415 weist in dem vorliegenden Ausführungsbeispiel vier logische Abstufungen 420, 425, 430, 435 auf (wobei das Bezugszeichen 440 wieder einer logischen '0' entspricht), welche durch einen gegenüber korrespondierenden bzw. quer zur Längsrichtung des Maßkörpers 400, 405 jeweils gegenüberliegenden Polpaaren der Inkrementalspur 400 stückweise mit Winkeln von 0°, 90°, 180° und 270° phasenverschobenen Absolutspur 405 gebildet werden. Dabei sind in der Absolutspur 405 die bereits in Fig. 3 gezeigten vier Stufen 305 umgesetzt worden.

Es ist anzumerken, dass hierbei ein logischer Wert definiert wird, der in dem vorliegenden Beispiel zufälliger Weise den Wert '01230' hat. Möglich ist dabei jede beliebige Kombination solcher Zahlen, z.B. '...1032302...'. Eine solche Kodierung befindet sich auf dem gesamten Maßkörper und darf sich über die Länge des Maßkörpers aus Gründen der Eindeutigkeit nicht wiederholen, was im Übrigen den Prinzipien eines genannten PRC-Codes entspricht.

Im unteren Teil der Fig. 4 ist die in Längsrichtung des Maßkörpers 400, 405 gemessene Winkeldifferenz zwischen der Inkrementalspur 400 und der Absolutspur 405 angedeutet. Die Winkeldifferenz ändert sich entsprechend den genannten vier Stufen 445, 450, 455, 460 vom Wert 0° auf den Wert 270°, um danach erneut beim Wert 0° (entsprechend dem Bezugszeichen 465) zu beginnen.

Es ist anzumerken, dass bei typischen relativen Abmessungen eines in Fig. 4 gezeigten Maßkörpers bei einer Polbreite von 20 mm bzw. 10 mm die Breite der jeweiligen Spuren etwa 10 mm bzw. 5 mm beträgt. Hier gilt der Zusammenhang, dass je größer der geforderte Luftspalt ist, umso größer die Polbreite und die Breite des Maßkörpers sein müssen.

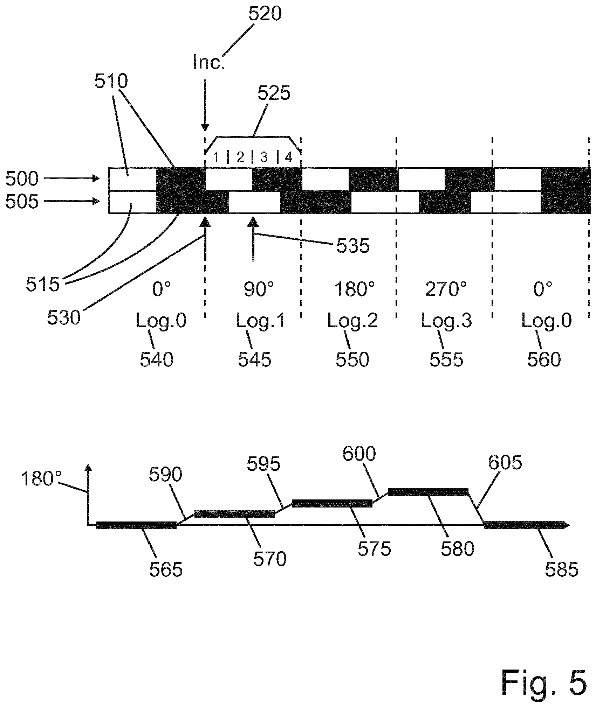

Innerhalb eines Polpaars 410 der Inkrementalspur 400 ist die Winkeldifferenz zwischen der Inkrementalspur 400 und der Absolutspur 405 im Wesentlichen konstant. Im Bereich des Wechsels der Winkeldifferenz von einem logischen Wert auf einen anderen (benachbarten) logischen Wert, z.B. von dem logischen Wert ‚1' 425 auf den logischen Wert ‚2' 430, lässt sich allein aus den entsprechenden Winkeldifferenzsignalen 450, 455 relativ schlecht auf den jeweils dahinterliegenden logischen Wert schließen. Deshalb werden für jedes Digit zwei Sensoren genutzt, wie in Fig. 5 zu ersehen.

In Fig. 5 ist bei einem Maßkörper 500, 505 mit einer Inkrementalspur 500 mit Polpaaren 510 sowie einer Absolutspur 505 mit Polpaaren 515, zusätzlich zu den wiederum gezeigten Winkeldifferenzen 565, 570, 575, 580, der Verlauf der Winkeldifferenz zwischen zwei benachbarten, unterschiedlichen logischen Werten 540, 545, 550, 555, 560 jeweils durch eine dünne Gerade 590, 595, 600, 605 angedeutet. Dieser Übergangsbereich muss bei der Auswertung der logischen Werte ausgeschlossen bzw. ausgeklammert werden.

Ein entsprechender Lösungsansatz ist der in Fig. 5 schematisch gezeigte Einsatz von zwei Absolutsensoren 530, 535 (A1, A2) für jedes Digit, die mechanisch um 180° versetzt angeordnet sind. Jeder der beiden Absolutsensoren 530, 535 erkennt dabei den Phasenbezug zur Inkrementalspur und kann aus zwei an verschiedenen Orten angeordneten Einzelsensoren, welche die Amplitude bewerten, oder aus einem an einem Ort angeordneten Sensorchip, der mit zwei unterschiedlich ausgerichteten Sensoren die Phase eines bevorzugt zweidimensionalen Magnetfeldes bestimmt, gebildet sein.

Der über der Inkrementalspur zusätzlich eingezeichnete Inkrementsensor 520 erkennt dabei zunächst die Position innerhalb eines Polpaares 510. Ein solches Polpaar 510 ist in mehrere Bereiche, und zwar vorliegend in vier Quadranten 525, unterteilt. Wenn sich der Inkrementsensor 520 im ersten Quadranten ‚1' oder im vierten Quadranten ‚4' des jeweiligen Polpaares befindet, muss der zweite Absolutsensor 535 (A2) für die Auswertung benutzt werden. Befindet sich der Inkrementsensor 520 jedoch im zweiten Quadranten ‚2' oder im dritten Quadranten '3', muss der erste Absolutsensor 530 (A1) für die Auswertung benutzt werden.

Mit dieser Methode lässt sich der ungültige Bereich zwischen den Polpaaren kostengünstig und dennoch wirkungsvoll ausblenden. Bei der Bestimmung der Phasenlage kürzen sich die Amplituden bei der mathematischen Berechnung heraus. Der Winkel wird durch Verhältnisbildung und mittels der arctan-Funktion bestimmt.

Es ist anzumerken, dass das beschriebene Messsystem auch bei mehreren Absolutspuren entsprechend angewendet werden kann, wodurch sich die Gehäuselänge vorteilhaft sogar entsprechend stärker reduziert.

Der beschriebene Maßkörper bzw. das beschriebene Längenmesssystem sowie das beschriebene Verfahren zu seinem Betrieb können bevorzugt in einem Magnetband-Längenmesssystem mit den hierin beschriebenen Vorteilen eingesetzt werden. Darüber hinaus können die Vorrichtung und das Verfahren jedoch prinzipiell bei allen rotatorischen und linearen Positionier-, Mess-, Verfahrgeschwindigkeits- oder Drehzahlüberwachungen angewendet werden. Zudem lässt sich das Verfahren nicht nur bei den hierin beschriebenen Magnetband-Längenmesssystemen bzw. magnetischen Messsystemen mit den genannten Vorteilen anwenden, sondern auch bei allen Arten von absoluten Messsystemen, die auf einem inkrementellen Wirkprinzip beruhen, z.B. induktiven, optischen oder kapazitiven Messsystemen oder dergleichen. Bei den zuletzt genannten, nicht-magnetischen Messsystemen sind die hierin beschriebenen Konzepte und Prinzipien analog anwendbar.

**Patentansprüche**

1. Längen- bzw. Positionsmesssystem, welches einen zumindest lokal im Wesentlichen linearen Maßkörper (400, 405) sowie wenigstens einen relativ zu dem Maßkörper (400, 405) zu verfahrenden, wenigstens einen Inkrementsensor (520) sowie wenigstens einen Absolutsensor (530, 535) umfassenden Sensorkopf (520, 530, 535) aufweist, wobei der Maßkörper (400, 405) eine Inkrementalspur (400) und wenigstens eine Absolutspur (405) umfasst und wobei die Inkrementalspur (400) sowie die wenigstens eine Absolutspur (405) in Längsrichtung des Maßkörpers (400, 405) angeordnete Polpaare (410, 415) aufweisen, **dadurch gekennzeichnet, dass** wenigstens zwei Polpaare (415) der wenigstens einen Absolutspur (405) gegenüber korrespondierenden wenigstens zwei Polpaaren (410) der Inkrementalspur (400) phasenverschoben angeordnet bzw. ausgebildet sind, wodurch wenigstens drei, in Längsrichtung des Maßkörpers durch Überlagerung der Magnetfelder der Polpaare (410) der Inkrementalspur (400) mit den Magnetfeldern der Polpaare (415) der Absolutspur (405) sich ergebende logische Abstufungen (445 - 460) der Magnetfeldamplitude gebildet werden.

2. Längen- bzw. Positionsmesssystem nach Anspruch 1, **dadurch gekennzeichnet, dass** die wenigstens eine Absolutspur (405) eine Mischung aus Polen unterschiedlicher Polarität bereitstellt, mittels der wenigstens zweifach abgestufte logische Werte erzeugt werden.

3. Längen- bzw. Positionsmesssystem nach Anspruch 1 oder 2, **dadurch gekennzeichnet, dass** durch eine genannte Phasenverschiebung n verschiedene, absolute Phasenbezüge (420 - 440) von Polpaaren (415) der wenigstens einen Absolutspur (405) in Bezug auf korrespondierende Polpaare (410) der Inkrementalspur (400) vorgesehen sind, wodurch gegenüber Polpaaren (410) der Inkrementalspur (400) Relativverschiebungen mit Winkeldifferenzen (445 - 465) zwischen 0° und 360° ausgebildet sind, mittels derer entsprechende logische Werte 1, 2, usw. gebildet werden, wobei jedes Polpaar mit einem jeweils zugehörigen Sensor ein Digit bildet.

4. Längen- bzw. Positionsmesssystem nach Anspruch 3, **dadurch gekennzeichnet, dass** mit jeweiligen Winkeldifferenzen (445 - 465) entsprechenden m logischen Werten und mit n Sensoren $m^n$ Werte erfassbar sind.

5. Längen- bzw. Positionsmesssystem nach Anspruch 4, **dadurch gekennzeichnet, dass** n Digits zu einem Gesamtwert verknüpft werden, wodurch $m^n$ Werte abbildbar sind.

6. Längen- bzw. Positionsmesssystem nach einem der vorhergehenden Ansprüche, **dadurch gekennzeichnet, dass** Übergangswerte der Winkeldifferenzen (445 - 465) zwischen zwei benachbarten, unterschiedlichen logischen Werten (420 - 440) von der Auswertung der logischen Werte ausgenommen sind.

7. Längen- bzw. Positionsmesssystem nach Anspruch 6, **dadurch gekennzeichnet, dass** wenigstens zwei Absolutsensoren (530, 535) für jedes Polpaar (515) der wenigstens einen Absolutspur (405) vorgesehen sind, welche zueinander versetzt angeordnet sind, und dass ein Inkrementsensor (520) vorgesehen ist, der die Position innerhalb eines in mehrere Bereiche (525) unterteilten Polpaares (510) der Inkrementalspur (500) erfasst.

8. Verfahren zum Betrieb eines Längen- bzw. Positionsmesssystems gemäß einem der vorhergehenden Ansprüche, **dadurch gekennzeichnet, dass** bei jeweiligen Winkeldifferenzen (445 - 465) entsprechenden m logischen Werten und bei n Sensoren $m^n$ Werte erfasst werden.

9. Verfahren nach Anspruch 8, **dadurch gekennzeichnet, dass** n Digits zu einem Gesamtwert verknüpft werden und dadurch $m^n$ Werte abgebildet werden.

10. Verfahren nach Anspruch 8 oder 9 zum Betrieb eines Längen- bzw. Positionsmesssystems, welches einen Inkrementsensor (520) sowie wenigstens zwei Absolutsensoren (530, 535) für jedes Polpaar (515) der wenigstens einen Absolutspur (405) aufweist, wobei die wenigstens zwei Absolutsensoren (530, 535) zueinander versetzt angeordnet sind, **dadurch gekennzeichnet, dass** der Inkrementsensor (520) die Position innerhalb eines in mehrere Bereiche (525) unterteilten Polpaares (510) der Inkrementalspur (500) erfasst, wobei in dem Fall, dass sich der Inkrementsensor (520) in einem der genannten Bereiche (525) befindet, einer der wenigstens zwei Absolutsensoren (530, 535) für die Auswertung berücksichtigt wird und wobei in dem Fall, dass sich der Inkrementsensor (520) in einem der beiden anderen Bereichen (525) befindet, der zweite der wenigstens zwei Absolutsensoren (530, 535) für die Auswertung berücksichtigt wird.

11. Verfahren nach einem der Ansprüche 8 bis 10, **dadurch gekennzeichnet, dass** Verläufe der Winkeldifferenzen zwischen zwei benachbarten, unterschiedlichen logischen Werten von der Auswertung der logischen Werte ausgenommen werden.

**Claims**

1. Length or position measuring system, which has an at least locally substantially linear measuring gauge (400, 405) and at least one sensor head (520, 530, 535) that is able to be moved relative to the measuring gauge (400, 405) and comprises at least one increment sensor (520) and at least one absolute sensor (530, 535), wherein the measuring gauge (400, 405) comprises an incremental track (400) and at least one absolute track (405) and wherein the incremental track (400) and the at least one absolute track (405) have pole pairs (410, 415) arranged in the longitudinal direction of the measuring gauge (400, 405), **characterised in that** at least two pole pairs (415) of the at least one absolute track (405) are arranged or formed phase-shifted relative to corresponding at least two pole pairs (410) of the incremental track (400), whereby at least three logical increments (445-460) of the magnetic field amplitude resulting in longitudinal direction by superposition of the magnetic fields of the pol pairs (410) of the incremental track (400) with the magnetic fields of the pol pairs (415) of the absolute track (405) are formed.

2. Length or position measuring system according to claim 1, **characterised in that** the at least one absolute track (405) provides a mixture of poles of different polarity, by means of which at least doubly incremented logical values are generated.

3. Length or position measuring system according to claim 1 or 2, **characterised in that** n different, absolute phase relations (420 - 440) of pole pairs (415) of the at least one absolute track (405) are provided by said phase-shifting in relation to corresponding pole pairs (410) of the incremental track (400), whereby, in comparison to pole pairs (410) of the incremental track (400), relative shifts with angles differences (445 - 465) of between 0° and 360° are formed, by means of which corresponding logical values 1, 2, etc. are formed, wherein each pole pair with a respectively associated sensor forms a digit.

4. Length or position measuring system according to claim 3, **characterised in that** $m^n$ values are able to de detected by m logical values and n sensors corresponding to respective angle differences (445 - 465).

5. Length or position measuring system according to claim 4, **characterised in that** n digits are connected to a total value, whereby $m^n$ values are able to be depicted.

6. Length or position measuring system according to one of the preceding claims, **characterised in that** the transition values of the angle differences (445 - 465) between two adjacent, different logical values (420 - 440) are removed from the evaluation of the logical values.

7. Length or position measuring device according to claim 6, **characterised in that** at least two absolute sensors (530, 535) are provided for each pole pair (515) of the at least one absolute track (405), which are arranged offset to one another, and an increment sensor (520) is provided that detects the position within a pole pair (510) of the incremental track (500), said pole pair being divided into numerous regions (525).

8. Method for operating a length or position measuring system according to one of the preceding claims, **characterised in that** m logical values are detected corresponding to respective angle differences (445 - 465) and $m^n$ values are detected by n sensors.

9. Method according to claim 8, **characterised in that** n digits are connected to form a total value and thus $m^n$ values are depicted.

10. Method according to claim 8 or 9 for operating a length or position measuring system which has an increment sensor (520) and at least two absolute sensors (530, 535) for each pole pair (515) of the at least one absolute track (405), wherein the at least two absolute sensors (530, 535) are arranged offset to one another, **characterised in that** the increment sensor (520) detects the position within a pole pair (510) divided into several regions of the incremental track (500), wherein, if the increment sensor (520) is in one of the two other regions (525), the second of the at least two absolute sensors (530, 535) is provided for the evaluation.

11. Method according to one of claims 8 to 10, **characterised in that** the courses of the angle differences between two adjacent, different logical values are removed from the evaluation of the logical values.

**Revendications**

1. Système de mesure de longueur, respectivement, de position, lequel présente un corps de mesure (400, 405) essentiellement linéaire au moins localement, ainsi qu'au moins une tête de capteur (520, 530, 535) se déplaçant relativement par rapport au corps de mesure (400, 405), comprenant au moins un capteur incrémental (520) ainsi qu'au moins un capteur absolu (530, 535), où le corps de mesure (400, 405) comprend une piste incrémentale (400) et au moins une piste absolue (405) et où la piste incrémentale (400) ainsi que l'au moins une piste absolue (405) présentent des paires de pôles (410, 415) disposées dans la direction longitudinale du corps de mesure (400, 405), **caractérisé en ce qu'**au moins deux paires de pôles (415) de l'au moins une piste absolue (405) sont disposées, respectivement conçues, décalées en phases par rapport à au moins deux paires de pôles (410) correspondantes de la piste incrémentale (400), ce par quoi, il se crée au moins trois échelons logique (445 à 460) d'amplitude du champ magnétique dans la direction longitudinale du corps de mesure par une superposition des champs magnétiques des paires de pôles (410) de la piste incrémentale (400) avec les champs magnétiques des paires de pôles (415) de la piste absolue (405).

2. Système de mesure de longueur, respectivement, de position, selon la revendication 1, **caractérisé en ce que** l'au moins une piste absolue (405) provoque un mélange de pôles de polarités différentes, au moyen desquelles au moins des valeurs logiques à deux échelons sont créées.

3. Système de mesure de longueur, respectivement, de position, selon la revendication 1 ou 2, **caractérisé en ce que**, par un dit décalage de phase, des références de phases absolues (420 à 440) différentes de paires de paires de pôles (415) de l'au moins une piste absolue (405) sont prévues par rapport à des paires de pôles (410) de la piste incrémentale (400) correspondantes, ce par quoi, des décalages relatifs par rapport à des paires de pôles (410) de la piste incrémentale (400) sont créées avec des différences d'angles (445 à 465) entre 0 ° et 360 °, au moyen desquelles des valeurs logiques 1, 2, etc. correspondantes sont constituées, où chaque paire de pôles forme un digit avec un capteur respectivement correspondant.

4. Système de mesure de longueur, respectivement, de position, selon la revendication 3, **caractérisé en ce qu'**avec m valeurs logiques correspondantes des différences d'angles (445 à 465) respectives et avec n capteurs, m" valeurs peuvent être détectées.

5. Système de mesure de longueur, respectivement, de position, selon la revendication 4, **caractérisé en ce que** n digits sont associés pour donner une valeur globale, ce par quoi m" valeurs peuvent être représentées.

6. Système de mesure de longueur, respectivement, de position, selon l'une des revendications précédentes, **caractérisé en ce que** des valeurs transitoires des différences d'angles (445 à 465) entre deux valeurs logiques (420 à 440) différentes [et ?] voisines sont exclues par l'évaluation des valeurs logiques.

7. Système de mesure de longueur, respectivement, de position, selon la revendication 6, **caractérisé en ce qu'**au moins deux capteurs absolus (530, 535) sont prévus pour chaque paire de pôles (515) de l'au moins une piste absolue (405), lesquels sont disposés décalés l'un par rapport à l'autre, et qu'un capteur incrémental (520) est prévu qui détecte la position dans une paire de pôles (510) subdivisée en plusieurs régions (525) de la piste incrémentale (500).

8. Procédé de mise en oeuvre d'un système de mesure de longueur, respectivement, de position, selon l'une des revendications précédentes, **caractérisé en ce que** pour m valeurs logiques correspondantes des différences d'angles (445 à 465) respectives et pour n capteurs, $m^n$ valeurs sont détectées.

9. Procédé selon la revendication 8, **caractérisé en ce que** n digits sont associés pour donner une valeur globale et par conséquent m" valeurs sont représentées.

10. Procédé selon la revendication 8 ou 9 destiné à la mise en oeuvre d'un système de mesure de longueur, respectivement, de position, lequel présente un capteur incrémental (520) ainsi qu'au moins deux capteurs absolus (530, 535) pour chaque paire de pôles (515) de l'au moins une piste absolue (405), où les au moins deux capteurs absolus (530, 535) sont disposés décalés l'un par rapport à l'autre, **caractérisé en ce que** le capteur incrémental (520) détecte la position dans une paire de pôles (510) subdivisée en plusieurs régions (525) de la piste incrémentale (500), où, dans le cas où le capteur incrémental (520) se trouve dans l'une desdites régions (525), on tient compte d'au moins un des deux capteurs absolus (530, 535) pour l'évaluation et où, dans le cas où le capteur incrémental (520) se situe dans l'une des deux autres régions (525), on tient compte du deuxième parmi les au moins deux capteurs absolus (530, 535) pour l'évaluation.

11. Procédé selon l'une des revendications 8 à 10, **caractérisé en ce que** les évolutions des différences d'angles entre deux valeurs logiques différentes et voisines sont exclues de l'évaluation des valeurs logiques.

**Inkrementell**

| 1 | 1 | 1 | 0 | 1 | 0 | 1 |

**Absolut (PRC)**

| 1 | 1 | 0 | 1 | 1 | 0 | 1 |

Fig. 1 (SdT)

Fig. 2 (SdT)

Fig. 3

Fig. 4

520
Inc.

510

525

1 | 2 | 3 | 4

500
505

515
530

535

0°          90°         180°        270°        0°
Log.0       Log.1       Log.2       Log.3       Log.0

540         545         550         555         560

180°

590         595         600                    605

565         570              575      580         585

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0109568 A1